# EUROPEAN PATENT SPECIFICATION

(11) **EP 3 623 108 B1**
(45) Date of publication and mention of the grant of the patent: **06.03.2024**
(21) Application number: 19177368.8
(22) Date of filing: 29.05.2019
(51) Int. Cl.: B25B 23/147

(54) **METHOD AND APPARATUS FOR DETECTING TIGHTENING QUALITY OF TIGHTENING TOOL**
VERFAHREN UND VORRICHTUNG ZUR DETEKTION DER FESTZIEHQUALITÄT EINES FESTZIEHWERKZEUGS
PROCÉDÉ ET APPAREIL DE DÉTECTION DE LA QUALITÉ DE SERRAGE D'OUTIL DE SERRAGE

(30) Priority: 01.06.2018 CN 201810553186
(43) Date of publication of application: 18.03.2020
(73) Proprietor: BMW Brilliance Automotive Ltd., 110044 Shenyang Liaoning Province (CN)
(72) Inventor: Wang, Duo, Shenyang, Liaoning 110044 (CN)
(74) Representative: Hauck Patentanwaltspartnerschaft mbB

(56) References cited:
- EP-A1- 3 040 163
- WO-A1-2017/162130
- DE-A1-102016 208 852
- US-A1- 2017 014 961

## Description

### TECHNICAL FIELD

The present disclosure relates to a method and apparatus for detecting tightening quality of a tightening tool as well as a storage medium.

### BACKGROUND ART

A tightening tool is a common tool used in a mechanical production workshop (such as an automobile assembling workshop). The tightening tool is generally used for tightening bolts, screws and the like into nuts. The tightening tool, for example, may be an electric wrench.

In a traditional method for assessing tightening quality, in a case where the maximum value of the tightening torque of the tightening tool and the maximum value of the tightening angle of the tightening tool fall into a respective threshold range prescribed by the industrial standard, the tightening quality is assessed as qualified, and in a case where the maximum value of the tightening torque of the tightening tool or the maximum value of the tightening angle of the tightening tool does not fall into the respective threshold range prescribed by the industrial standard, the tightening quality is assessed as unqualified. As used here, the tightening torque of the tightening tool represents a moment of force that causes the operation object (e.g., a bolt) to rotate, with a unit of Nm. The tightening angle of the tightening tool represents an angle that the operation object has rotated, with a unit of degree.

DE 102016208852 A1 discloses a method according to the preamble of claims 1 and 8, for determining an error type of an error in a screwing process. The method comprises: determining a screwing process curve for the screwing process, the screwing process curve indicating a tightening torque as a function of an angle of rotation during the screwing process. In addition, the method comprises determining the error type of the error of the screwing process by means of an algorithm for pattern recognition.

### DISCLOSURE OF THE INVENTION

An objective of the present disclosure is to provide an improved method and apparatus for detecting the tightening quality.

The present disclosure proposes a method for detecting tightening quality of a tightening tool, the method comprising: obtaining tightening data generated during a tightening process of the tightening tool, and generating a tightening curve representing change of the tightening data over time; and performing pattern recognition on the tightening curve to classify the tightening curve, wherein a different category of the tightening curve corresponds to a different category of tightening quality of the tightening tool.

The invention provides a method for detecting tightening quality of a tightening tool, comprising: obtaining tightening data generated during a tightening process of the tightening tool, and generating a tightening curve representing change of the tightening data over time, wherein the tightening curve comprises a torque curve representing change of torque data of the tightening tool over time and an angle curve representing change of angle data of the tightening tool over time; and performing pattern recognition on the tightening curve to classify the tightening curve, wherein a different category of the tightening curve corresponds to a different category of tightening quality of the tightening tool, wherein the different categories of tightening quality of the tightening tool comprises: a qualified category in which industrial standard thresholds are satisfied, a hidden threat category in which the industrial standard thresholds are satisfied but there is a hidden threat, and an unqualified category in which the industrial standard thresholds are not satisfied, wherein the industrial standard thresholds being satisfied means that both a maximum magnitude of the torque curve and a maximum magnitude of the angle curve fall within a range of thresholds defined by lower and upper thresholds set according to an industry standard, and the industrial standard thresholds being not satisfied means that the maximum magnitude of the torque curve and/or the maximum magnitude of the angle curve do not fall within said range of thresholds, wherein the unqualified category includes at least one of the following two sub-categories: existence of welding slag, wherein in a case where the industrial standard thresholds are not satisfied and the magnitudes of the torque curve randomly oscillate in the front and middle segments of the torque curve and the torque curve has one or more peaks accompanied by the random oscillation, wherein the peaks are greater than amplitudes of the random oscillation and less than said maximum magnitude, the category of the tightening quality of the tightening tool is determined to be existence of welding slag; and human operation, wherein in a case where the industrial standard thresholds are not satisfied, and the magnitudes of the torque curve oscillate and amplitudes of the oscillation increase or decrease as the time elapses in the middle and rear segments of the torque curve, the category of the tightening quality of the tightening tool is determined to be human operation.

Furthermore, the invention provides a method for detecting tightening quality of a tightening tool, comprising: obtaining tightening data generated during a tightening process of the tightening tool, and generating a tightening curve representing change of the tightening data over time, wherein the tightening curve comprises a torque curve representing change of torque data of the tightening tool over time and an angle curve representing change of angle data of the tightening tool over time; and performing pattern recognition on the tightening curve to classify the tightening curve, wherein a different category of the tightening curve corresponds to a different category of tightening quality of the tightening tool, wherein the different categories of tightening quality of the tightening tool comprises: a qualified category in which industrial standard thresholds are satisfied, a hidden threat category in which the industrial standard thresholds are satisfied but there is a hidden threat, and an unqualified category in which the industrial standard thresholds are not satisfied, wherein the industrial standard thresholds being satisfied means that both a maximum magnitude of the torque curve and a maximum magnitude of the angle curve fall within a range of thresholds defined by lower and upper thresholds set according to an industry standard, and the industrial standard thresholds being not satisfied means that the maximum magnitude of the torque curve and/or the maximum magnitude of the angle curve do not fall within said range of thresholds, wherein the hidden thread category includes at least one of the following three sub-categories: angle rollback caused by human operation, wherein in a case where the industrial standard thresholds are satisfied, and the torque curve has a small peak in the front and/or middle segments of the torque curve, wherein the small peak is smaller than a half of said maximum magnitude, the category of the tightening quality of the tightening tool is determined to be angle rollback caused by human operation; existence of welding slag or screw thread damage, wherein in a case where the industrial standard thresholds are satisfied, and the magnitudes of the torque curve randomly oscillate in the front and middle segments of the torque curve and the torque curve has a peak accompanied by the random oscillation, wherein the peak is greater than amplitudes of the random oscillation and less than said maximum magnitude, the category of the tightening quality of the tightening tool is determined to be existence of welding slag or screw thread damage; and human operation, wherein in a case where the industrial standard thresholds are satisfied, and the magnitudes of the torque curve periodically oscillate and the amplitudes of the periodic oscillation increase as the time elapses in the front and/or middle segments of the torque curve, the category of the tightening quality of the tightening tool is determined to be human operation.

Other features and advantages of the present disclosure will become obvious with the following description referring to the drawings.

### DESCRIPTION OF THE DRAWINGS

The drawings incorporated into the description and constituting a part of the description illustrate embodiments of the present disclosure and are used for interpreting the principle of the present disclosure together with the description without any limitation. In the respective figures, similar reference sings represent similar items.
Fig. 1 is a block diagram of an exemplary tightening quality detecting apparatus according to some embodiments of the present disclosure.
Fig. 2 is a flow chart showing an exemplary tightening quality detecting method according to some embodiments of the present disclosure.
Fig. 3 is a block diagram of an exemplary tightening quality detecting apparatus according to one embodiment of the present disclosure.
Fig. 4 is a flow chart showing an exemplary tightening quality detecting method according to said one embodiment of the present disclosure.
Fig. 5 is a flow chart showing exemplary detailed processing in the pattern recognition step according to said one embodiment of the present disclosure.
Fig. 6 is a flow chart showing exemplary detailed processing in the classification model establishing step according to said one embodiment of the present disclosure.
Fig. 7 shows an exemplary torque curve corresponding to a qualified category in which industrial standard thresholds are satisfied.
Figs. 8A-8C respectively show exemplary torque curves corresponding to a hidden threat category in which the industrial standard thresholds are satisfied but a hidden threat is present.
Figs. 9A-9E respectively show exemplary angle curves and torque curves corresponding to an unqualified category in which the industrial standard thresholds are not satisfied.
Fig. 10 shows a general hardware environment to which the present disclosure may be applied according to some embodiments of the present disclosure.

### EMBODIMENTS

Many details are illustrated below to provide thorough understanding on the exemplary embodiments as described. However, it is clear to those skilled in the art that the embodiments as described may be practiced without some or all of these details. In the exemplary embodiments as described, in order to avoid unnecessary confusion on the concepts of the present disclosure, well-known structures or processing steps are not described in detail.

The block in each of the block diagrams as shown below may be implemented by hardware, software, firmware or any combination thereof in order to realize the principle of the present disclosure. It shall be understood to those skilled in the art that the block described in each of the block diagrams may be combined or divided into sub-blocks in order to realize the principle of the present disclosure.

The steps of the method presented in the present disclosure intends to be illustrative. In some embodiments, the method may be carried out with one or more additional steps that are not described and/or without one or more steps that are discussed. In addition, the order of the steps of the method as shown and described are not restrictive.

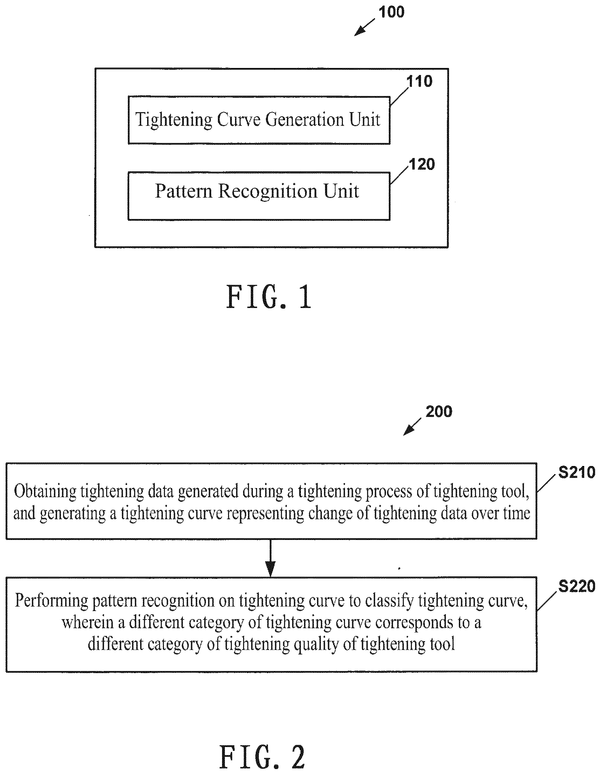

Fig. 1 is a block diagram showing an exemplary tightening quality detecting apparatus 100 according to some embodiments of the present disclosure. As shown in Fig. 1, the apparatus 100 may comprise a tightening curve generation unit 110, which is configured to obtain tightening data generated during a tightening process of a tightening tool, and generate a tightening curve representing change of the tightening data over time. The apparatus 100 may further comprise a pattern recognition unit 120, which is configured to perform pattern recognition on the tightening curve to classify the tightening curve, wherein a different category of the tightening curve corresponds to a different category of tightening quality of the tightening tool.

Fig. 2 is a flow chart showing an exemplary tightening quality detecting method 200 according to some embodiments of the present disclosure. The method 200 may comprise: a step S210 of obtaining tightening data generated during a tightening process of a tightening tool, and generating a tightening curve representing change of the tightening data over time. The method 200 may further comprise: a step S220 of performing pattern recognition on the tightening curve to classify the tightening curve, wherein a different category of the tightening curve corresponds to a different category of tightening quality of the tightening tool.

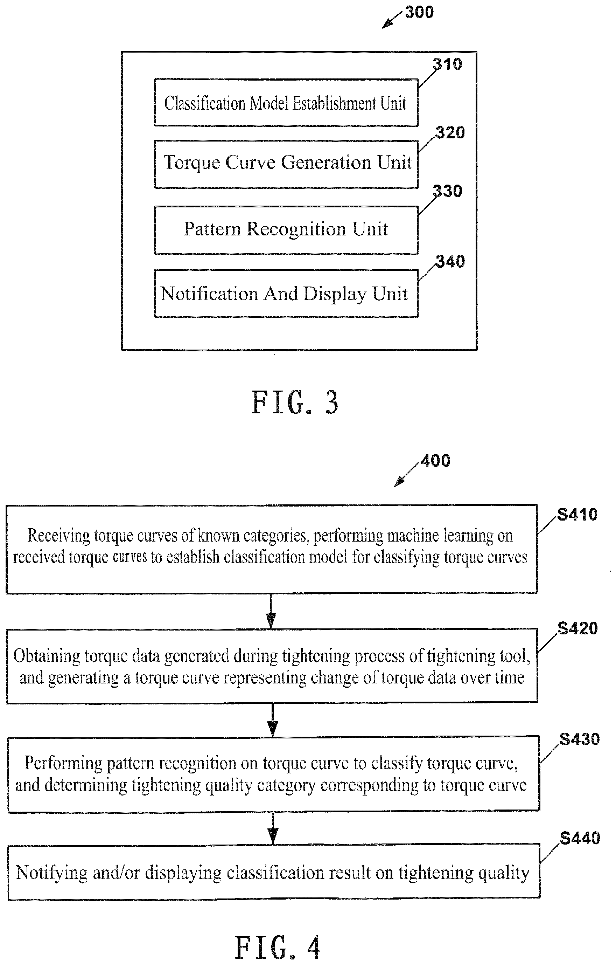

Next, an exemplary embodiment of the present disclosure will be described with reference to Fig. 3 to Fig. 9.

In the embodiment, the tightening curve under consideration is a torque curve representing change of torque data of the tightening tool over time. However, the present disclosure is not limited thereto. Alternatively, the tightening curve may comprise other curves capable of reflecting the tightening quality, such as an angle curve representing change of angle data of the tightening toll over time.

Fig. 3 is a block diagram showing an exemplary tightening quality detecting apparatus 300 according to the embodiment.

As shown in Fig. 3, the apparatus 300 may comprise: a classification model establishment unit 310, which is configured to establish a classification model that classifies the torque curve by performing machine learning on torque curves of known categories; a torque curve generation unit 320, which is configured to obtain torque data generated during a tightening process of the tightening tool and to generate a torque curve representing change of the torque data over time; a pattern recognition unit 330, which is configured to perform pattern recognition on the torque curve to so as to classify the torque curve, wherein a different category of the torque curve corresponds to a different category of tightening quality of the tightening tool; and a notification and display unit 340, which is configured to notify and display a result of classification of the tightening quality and to display the torque curve of the tightening tool.

Operations of the respective units as shown in Fig. 3 will be described in detail below.

Fig. 4 is a flow chart showing an exemplary tightening quality detecting method 400 according to the embodiment.

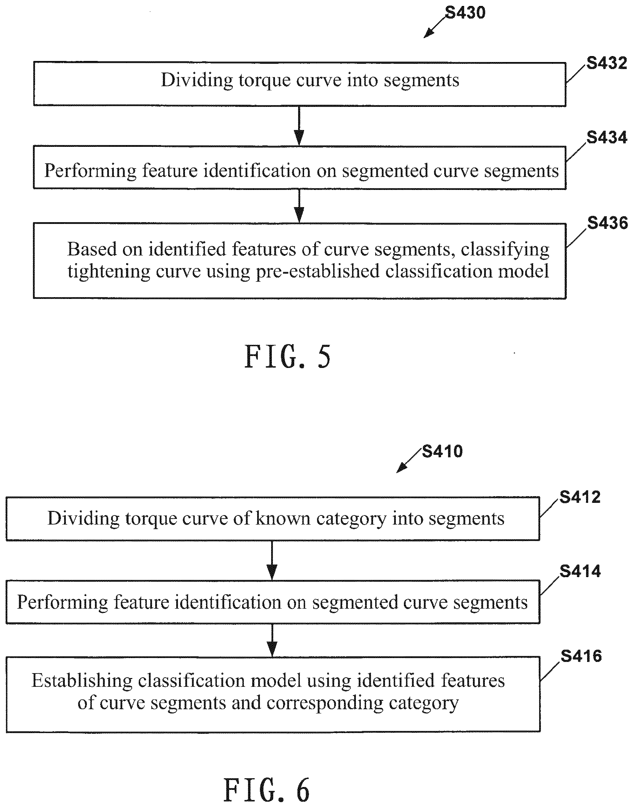

The method 400 starts from step S410. At step S410, the classification model establishment unit 310 receives torque curves of known categories, and performs supervised machine learning on the received torque curves in order to establish a classification model for classifying a torque curve. Subsequently, the step of establishing the classification model will be described in detail with reference to Fig. 6.

The method 400 proceeds to step S410. At step S420, the torque curve generation unit 320 obtains torque data generated during a tightening process of the tightening tool, and generates a torque curve representing change of the torque data over time.

In particular, a process is considered in which one tightening tool tightens one bolt. From start of the tightening tool to completion of the tightening operation (i.e., during a tightening process), a plurality of discrete data points are collected by the tightening tool, and the collected data points are sent in real time by the tightening tool to a data platform maintained by the tightening tool manufacturer. The collected data points include a value of the torque and a corresponding time. The collected data points may further include a value of the angle and a corresponding time. Generally, depending on the duration of the tightening process, 150 to 1,000 discrete data points may be collected.

The torque curve generation unit 320 obtains the collected data points from the data platform, and performs fitting on the collected data points to obtain a torque curve on which the torque continuously changes as time elapses. The torque curve generation unit 320 may obtain collected data points in real time or periodically from the data platform. It shall be understood that the resultant torque curve reflects the torque change during the entire tightening process. Fitting of discrete data points may be performed by any known fitting method.

The method 400 proceeds to step S430. At step S430, the pattern recognition unit 330 receives the torque curve from the torque curve generation unit 320, performs recognition pattern on the torque curve so as to classify the torque curve. A different category of the torque curve corresponds to a different tightening quality category of the tightening tool.

Fig. 5 is a flow chart showing exemplary detailed processing in step S430.

As shown in Fig. 5, at sub-step S432, the pattern recognition unit 330 divides the torque curve into segments. The pattern recognition unit 330 divides the torque curve into a predetermined number of segments. In one example, the pattern recognition unit 330 divides the torque curve into 100 equal segments. Alternatively, the torque curve may be divided into unequal segments. At sub-step S434, the pattern recognition unit 330 performs feature identification on the segmented curve segments. In the example in which the torque curve is divided into 100 equal segments, the pattern recognition unit 330 identifies the feature of each curve segment among the 100 curve segments. The identified feature of the curve segment includes, but is not limited to, one or both of the following features: (1) the slope of the straight line defined by the starting point and the endpoint of the curve segment; and (2) the differential value between the coordinates of the starting point and the endpoint of the curve segment, or one or more differential values between coordinates of two or more points on the curve segment. For example, the identified feature of the curve segment may include the differential values between coordinates of every two neighboring points among three or more points on the curve segment. The differential value as used here may be a normalized value obtained by dividing the differential value by a standard value. Here, the identified feature of the curve segment can reflect a change tendency or a degree of smoothness of the curve segment. In particular, the change tendency of the curve segment, for example, refers to whether the curve segment is ascending, descending or substantially horizontal. The degree of smoothness of the curve segment, for example, refers to whether the curve segment includes sharp corners, whether the sharp corners protrude upwardly or downwardly, and what angles the sharp corners have. Subsequently, the pattern recognition unit 330 arranges the identified features of respective curve segments (such as one or more numerical values or one or more sets of numerical values) in chronological order to form one n-dimensional vector, where n is an integer greater than 1 and represents the number of curve segments obtained from the division. At sub-step 436, the pattern recognition unit 330 inputs this n-dimensional vector into a pre-established classification model, thereby obtaining a classification result for the torque curve as the output from the classification model.

The step S410 of pre-establishing the classification model will be described below with reference to Fig. 6.

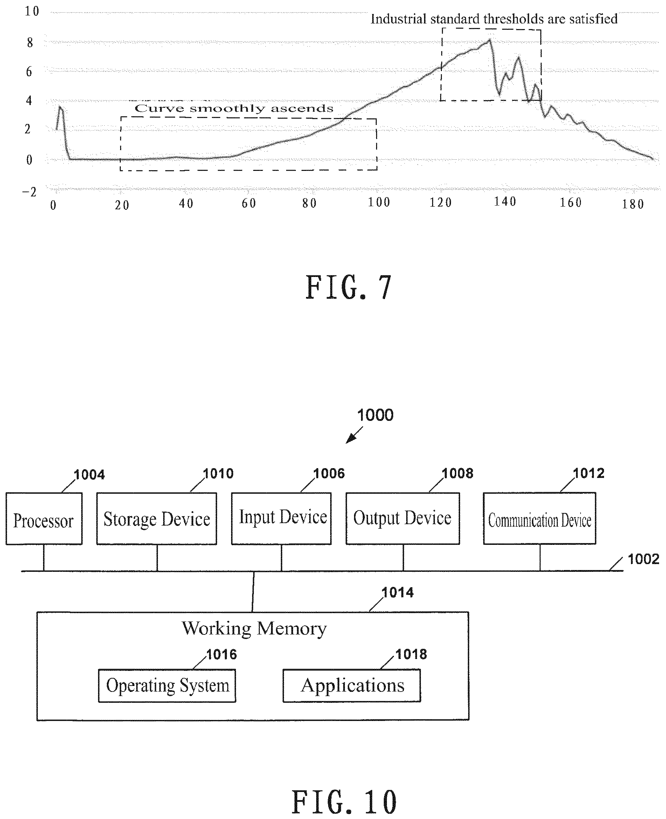

As shown in Fig. 6, at sub-step S412, the classification model establishment unit 310 receives torque curves of known categories. A category label is added to the torque curve manually. The added category labels include: a qualified category (i) in which industrial standard thresholds are satisfied, a hidden threat category (ii)-(iv) in which the industrial standard thresholds are satisfied but there are hidden threats, and an unqualified category (v)-(ix) in which the industrial standard thresholds are not satisfied. Subsequently, the correspondence between the torque curve and the tightening quality category will be described with reference to Figs. 7 to 9E. The torque curves of known categories may be stored in a learning library (such as a local or remote database). In addition, the classification model establishment unit 310 divides each tightening curve of known category into segments. It shall be noted that the number of segments into which the torque curve is divided at the pattern recognition phase (S430) shall be consistent with the number of segments into which the torque curve is divided at the model establishment phase (S410). Furthermore, the portion of the torque curve focused at the pattern recognition phase shall be consistent with the portion of the torque curve focused at the model establishment phase. In the embodiment, the torque curve representing the entire tightening process is focused in both of the two phases. Alternatively, it is possible to focus on merely a key portion of the torque curve, i.e., a portion of the torque curve from 0 to the maximum value. At sub-step S414, the classification model establishment unit 310 performs feature identification on the segmented curve segments. The identified feature of the curve segment at sub-step S414 is consistent with the identified feature of the curve segment at sub-step S434. In addition, the classification model establishment unit 310 arranges the identified features in chronological order to form one n-dimensional vector, where n is an integer greater than 1 and represents the number of curve segments obtained from the division. Subsequently, at sub-step S416, the classification model establishment unit 310 trains the classification model by using the formed vector and a corresponding category label, thereby establishing the classification model. A plurality of torque curves of the qualified category (i), the hidden threat category (ii)-(iv) and the unqualified category (v)-(ix) are used as the training samples to train the classification model. Hundreds or even thousands of torque curves of know categories may be used to train the classification model. Any suitable supervised machine learning algorithm may be used here to establish the classification model. In addition, the curve classified at step S430 may be added to the learning library for further machine learning.

Next, different tightening quality categories of the tightening tool and the correspondence between the torque curves and different tightening quality categories will be described with reference to Figs. 7 to 9E.

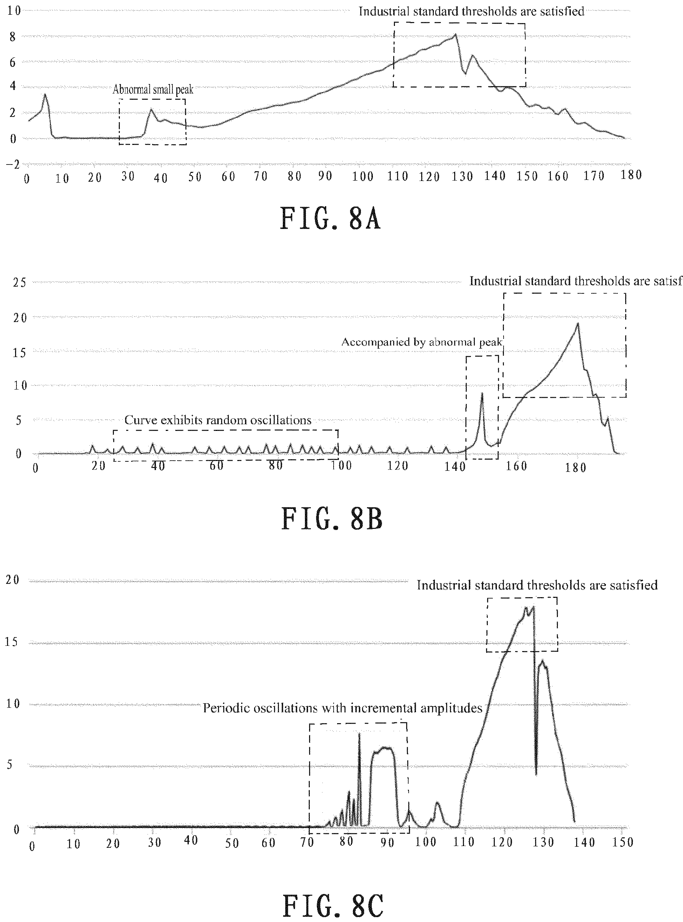

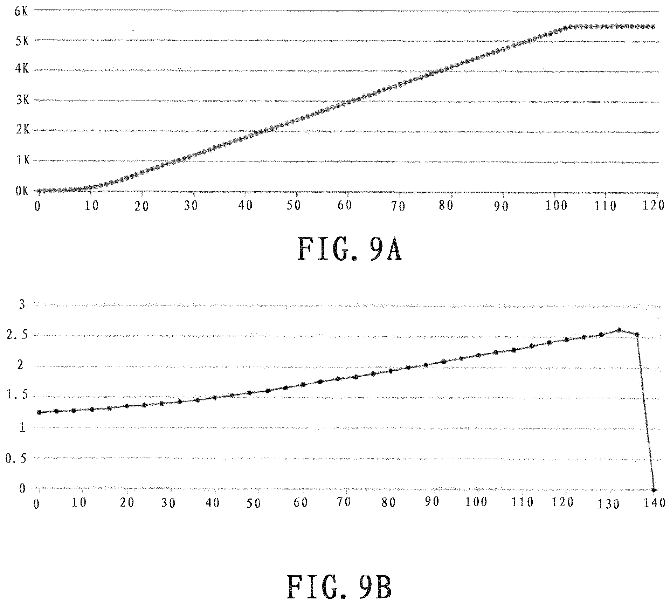

Fig. 7 shows an exemplary torque curve corresponding to a qualified category (i) in which industrial standard thresholds are satisfied. Figs. 8A-8C respectively show exemplary torque curves corresponding to hidden threat categories (ii)-(iv) in which the industrial standard thresholds are satisfied but a hidden threat is present. Figs. 9A-9E respectively show exemplary angle curves and torque curves corresponding to unqualified categories (v)-(iv) in which the industrial standard thresholds are not satisfied. Among Figs. 7-9E, Fig. 9A shows an angle curve, and the figures other than Fig. 9A show torque curves. In Fig. 9A, the abscissa denotes time, and the ordinate denotes angle. In Figs. 7, 8A-8C and 9B-9E, the abscissa denotes time, and the ordinate denotes torque. Any suitable time unit, angle unit and torque unit may be used. The value of the torque varies with the DC tool. However, it shall be noted that the characteristics of the torque curves as described below exist across different DC tools. It shall also be noted that the specific values denoting time and the specific values denoting torque and angle as given in Figs. 7-9E are merely exemplary but are not intended to restrict the scope of the present disclosure.

In the following description, the expressions "front segment", "middle segment" and "rear segment" of the curve are used to describe the characteristics of a curve. It shall be noted that the expressions "front segment", "middle segment" and "rear segment" as used here respectively correspond to three segments arranged in chronological order that are obtained by dividing the torque curve into 3 approximately equal segments. Here, the term "approximately" means that each segment corresponds to a section of 1/3 ± 5% of the torque curve.

In the following description, that the industrial standard thresholds are satisfied means both the torque maximum value and the angle maximum value of the tightening tool fall into a range that is set according to the industrial standard and defined by a lower limit threshold and an upper limit threshold. That the industrial standard thresholds are not satisfied means the torque maximum value and/or the angle maximum value of the tightening tool do not fall into the range that is set according to the industrial standard and defined by a lower limit threshold and an upper limit threshold.

As shown in Fig. 7, as indicated by the dotted frame lines in the right side of the figure, the torque curve corresponding to the qualified category (i) satisfies the industrial standard thresholds. Furthermore, as indicated by the dotted frame lines in the left side of the figure, the torque curve ascends smoothly in the front and middle segments of the curve.

The three torque curves shown in Figs. 8A-8C respectively correspond to the following sub-categories of the hidden threat categories: (ii) angle rollback caused by human operation; (iii) existence of welding slag (or oil slag) or screw thread damage; and (iv) human operation.

More particularly, the hidden threat category refers to a category in which although the industrial standard thresholds are satisfied, there is a risk that the bolt may become loose or drop later.

As can be seen from Figs. 8A-8C, as indicated by the dotted frame lines in the rightmost of the respective figures, each torque curve satisfies the industrial standard thresholds.

Further, as shown in Fig. 8A, as indicated by the dotted frame lines in the leftmost of the figure, the torque curve has an abnormal small peak in the front segment. Although not shown, such abnormal small peak may also occur in the middle segment of the torque curve or in both the front and the middle segments of the torque curve. There may be one or more abnormal small peaks. Here, the term "small peak" refers to the peak having a small amplitude as compared with the maximum amplitude of the torque curve. For example, a small amplitude refers to an amplitude less than a half of the maximum amplitude of the torque curve.

Such abnormal small peak occurs because, for example, during the tightening process, the worker puts one hand on the other hand that operates the tightening tool, resulting the rollback of the angle. Under this circumstance, although the industrial standard thresholds are satisfied, due to the occurrence of the angle rollback during the tightening process, the tightened bolt may be liable to loose or drop later.

As shown in Fig. 8B, as indicated by the dotted frame lines in the left side of the figure, the torque curve has random oscillations in the front and middle segments, and as indicated by the dotted frame lines in the middle of the figure, an abnormal peak occurs accompanied by the random oscillations. The abnormal peak may be present in the middle and/or rear segments of the curve. There may be one or more abnormal peaks.

The random oscillations and the abnormal peak occur because welding slag or oil slag residue is present on the bolt, or screw thread on the bolt is damaged. Under this circumstance, although the industrial standard thresholds are satisfied, due to the presence of welding slag or the screw thread damage, the tightened bolt may be liable to loose or drop later.

As shown in Fig. 8C, as indicated by the dotted frame lines in the left side of the figure, the torque curve has periodic oscillations with incremental amplitudes in the middle segment. Although not shown, such periodic oscillations with incremental amplitudes may also occur in the front segment of the torque curve.

Such periodic oscillations with incremental amplitudes occur because, for example, the bolt was mis-screwed. Under this circumstance, although the industrial standard thresholds are satisfied, due to the mis-screwing, the tightened bolt may be liable to loose or drop later.

The five curves shown in Figs. 9A-9E respectively correspond to the following sub-categories in the unqualified categories: (v) angle insufficiency; (vi) torque insufficiency; (vii) existence of welding slag; (viii) human operation; and (ix) malfunctions other than angle insufficiency, torque insufficiency, existence of welding slag and human operation.

Figs. 9A and 9B respectively show the angle curve and the torque curves not satisfying the industrial standard thresholds. The circumstances shown in Figs. 9A and 9B respectively correspond to circumstances of angle insufficiency (i.e., the maximum value of the angle does not fall into a range of thresholds prescribed by the industrial standard) and torque insufficiency (i.e., the maximum value of the torque does not fall into a range of thresholds prescribed by the industrial standard) in conventional tightening quality assessing methods.

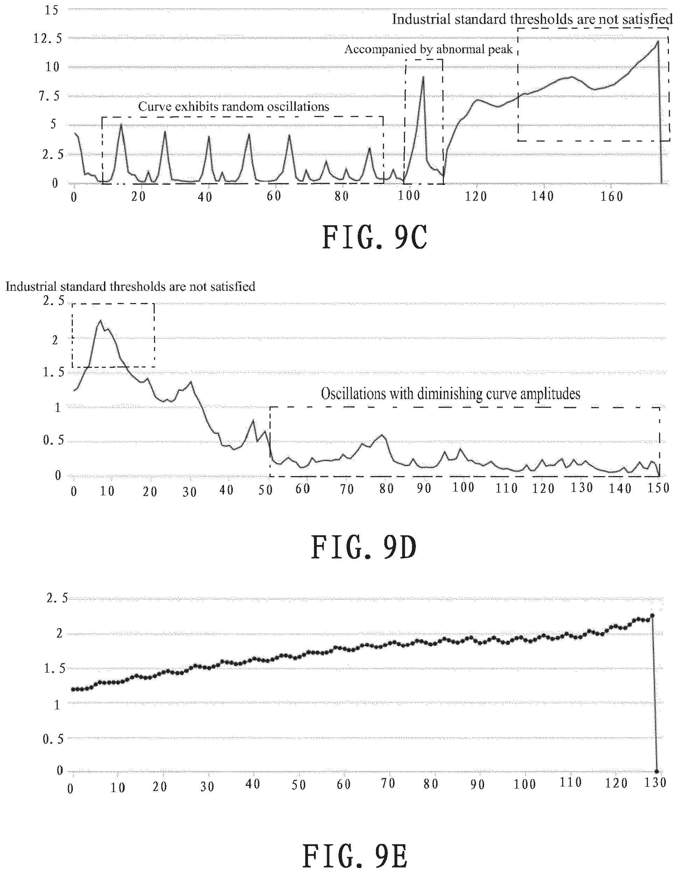

As can be seen from Figs. 9C-9E, each torque curve does not satisfy the industrial standard thresholds.

Further, as shown in Fig. 9C, as indicated by the dotted frame lines in the left side of the figure, the torque curve has random oscillations in the front and middle segments, and as indicated by the dotted frame lines in the middle of the figure, an abnormal peak occurs accompanied by the random oscillations. The abnormal peak may be present in the middle and/or rear segments of the curve. There may be one or more abnormal peaks.

Causes for the circumstance as shown in Fig. 9C may include existence of welding slag or oil slag residue on the bolt. Under this circumstance, the tightening operation needs to be re-performed. Since the reason for the tightening failure can be identified, a qualified tightening operation can be performed by, for example, removing the welding slag or replacing the bolt.

As shown in Fig. 9D, as indicated by the dotted frame lines in the right side of the figure, the torque curve has oscillations with diminishing amplitudes in the middle and rear segments. Although not shown, oscillations with incremental amplitudes may exist in the middle and rear segments.

Causes for the circumstance as shown in Fig. 9D may include, for example, the bolt was mis-screwed. Under this circumstance, the tightening operation needs to be re-performed. Since the reason for the tightening failure can be identified, a qualified tightening operation can be performed by, for example, correcting the operating worker's tightening action.

As shown in Fig. 9E, the industrial standard thresholds are not satisfied, and the torque curve fluctuates constantly. The torque curve as shown in Fig. 9E is merely exemplary, and curves that cannot be classified into the sub-categories (v)-(viii) are all classified into the other malfunction sub-category (ix).

Returning now to refer to Fig. 4, the method 400 proceeds to step S440. At step S440, the notification and display unit 340 notifies and/or displays the classification result on the tightening quality. In addition, the notification and display unit 340 may display the torque curve of the tightening tool.

In one example, the notification and display unit 340 sends in real time the classification result on the tightening quality in the form of a short message to a telephone watch worn by the worker operating the tightening tool. That is, upon tightening a bolt, the worker can immediately see an assessment on the quality of the tightening operation. Alternatively, in a case where multiple qualities of tightening by the worker have hidden threats or are unqualified, a reminder and/or warning may be sent to the worker in the form of a short message. Given that the specific reasons (i.e., the specific categories) for the presence of hidden threats or disqualification are understood, the worker can improve the tightening quality by timely correcting inappropriate operation behaviors or replacing the bolt with a bolt having a better quality. Still alternatively, the notification and display unit 340 may send in real time the classification results on the tightening quality to a management personnel managing the workers in the form of an e-mail. For example, the notification and display unit 340 may periodically send a disqualification rate of tightening operations by each worker and the specific categories of disqualification to the management personnel. By means of the real-time quality report, the management personnel may timely find out and solve the problems.

In another example, the notification and display unit 340 sends the classification results on the tightening quality to a display such that the display graphically displays the classification results on the quality. In particular, the notification and display unit 340 organizes quality assessment results on a plurality of tightening tools in a statistical manner and causes the display to display the statistical result in the form of a pie chart, a bar chart or the like. For example, the notification and display unit 340 may cause the display to display among 200,000 times of tightening operations per day in a workshop, how many times belong to the qualified category, how many times belong to the hidden threat category and how many times belong to the unqualified category, and may cause the display to display numbers of tightening operations belonging to the sub-categories of the hidden threat category and the unqualified category. In a preferred example, the notification and display unit 340 displays quality assessment results on a plurality of tightening tools on the display in the form of a matrix. On one dimension of the matrix (such as the horizontal dimension), IDs of the tightening tools are displayed, and on another dimension of the matrix (such as the vertical dimension), dates are displayed. In addition, graphs (e.g., circles) of different colors are used to represent assessments on tightening quality of each tightening tool every day. For example, a green circle may be used to represent a qualification rate (i.e., a ratio of qualified operations among a certain number of tightening operations by each tightening tool every day) above 98%, a yellow circle may be used to represent a qualification rate of 95%-98%, and a red circle may be used to represent a qualification rate below 95%. By such intuitive display, the management personnel can easily grasp quality of tightening operations by each tightening tool (i.e., a corresponding worker) every day and a tendency of change in the quality of the tightening operations by each tightening tool.

In a further example, the notification and display unit 340 sends tightening curves of one or more tightening tools to the display to cause them to be displayed on the display. Through such display, observation and analysis as well as diagnostics on the tightening curves become possible.

It shall be noted that operation objects of the tightening tool are not limited to bolts, screws, or the like, but can include any suitable component that can be tightened by the tightening tool.

As mentioned above, conventional tightening quality assessing methods only focus on the maximum value of the tightening torque. Different from conventional methods, the tightening quality detecting method according to the present disclosure focuses on the torque curve reflecting torque changes during the tightening process. By performing pattern recognition on the torque curve reflecting torque changes during the tightening process, the method according to the present disclosure can identify circumstances in which the industrial standard thresholds are satisfied but the hidden threat may exist. In particular, hidden threat operations caused by human operation or welding slag and screw thread damage can be identified. Further, by performing pattern recognition on the torque curve reflecting torque changes during the tightening process, the method according to the present disclosure can identify unqualified operations caused by human operation or welding slag residues.

Under the circumstance that unqualified operations caused by human operation or welding slag residues can be identified, the qualification rate on operations by the tightening tool can be increased by training the workers to correct their inappropriate operating behaviors and improving quality of the components to reduce welding slag.

Under the circumstance that hidden threat operations caused by human operation or welding slag and screw thread damage can be identified, further improvement on the tightening quality of the components becomes possible. In an occasion where there is a high requirement on the tightening quality of the component, in case the hidden threat category is identified, it may be required to re-perform the tightening operation. Further, similarly, in case the hidden threat operation is found, working quality of the tightening tool may be improved by training the workers and improving quality of the component.

In addition, in case the workers are trained or quality of the component is improved, the working efficiency of the tightening tool can be improved while the working quality of the tightening tool is improved.

### Hardware Implementation

Fig. 10 shows a general hardware environment 1000 to which the present disclosure may be applied according to an exemplary embodiment of the present disclosure.

Referring to Fig. 10, a computing device 1000 as an example of a hardware device to which the respective aspects of the present disclosure can be applied is described. The computing device 1000 may be any machine configured to execute processing and/or computing, including, but being not limited to, a workstation, a server, a desktop computer, a laptop computer, a tablet computer, a personal digital assistant, a smart phone, a portable camera or any combination thereof. Each of said apparatuses 100 and 300 may be implemented entirely or at least partially by the computing device 100 or a similar device or system.

The computing device 1000 may include elements capable of being connected to or communicating with a bus 1002 via one or more interfaces. For example, the computer device 1000 may include a bus 1002, one or more processors 1004, one or more input devices 1006 and one or more output devices 1008. The one or more processors 1004 may be processors of any type, and may include but be not limited to one or more general processors and/or one or more dedicated processors (such as dedicated processing chips). The input device 1006 may be a device of any type that is capable of inputting information to the computing device, and may include but be not limited to a mouse, a keyboard, a touchscreen, a microphone and/or a remoter. The output device 1008 may be a device of any type that is capable of presenting information, and may include but be not limited to a display, a speaker, a video/audio output terminal and/or a printer. The computing device 1000 may further include a non-transitory storage device 1010 or may be connected to the non-transitory storage device 1010. The non-transitory storage device 1010 may be any storage device that is non-transitory and may implement a data memory library, and may include but be not limited to a disk driver, an optical storage device, a solid-state storage device, a floppy disk, a flexible disk, a hard disk, a tape or any other magnetic medium, compact disk or any other optical medium, ROM (Read-Only Memory), RAM (Random Access Memory), cache and/or any other memory chip or cassette tape, and/or any other medium from which a computer may read data, instructions and/or codes. The non-transitory storage device 1010 may be detachable through an interface. The non-transitory storage device 1010 may have data/instructions/codes for performing said method and steps. The computing device 1000 may further include a communication device 1012. The communication device 1012 may be a device or system of any type that is capable of communicating with an external device and/or network, and may include but be not limited to a modem, a network card, an IR communication device, a wireless communication device and/or a chip group such as a Blue Tooth TM device, a 1002.11 device, a WiFi device, a WiMax device, cellular communication facilities, or the like.

The bus 1002 may include but be not limited to an Industrial Standard Architecture (ISA) bus, a Micro Channel Architecture (MCA) bus, an Enhanced ISA (EISA) bus, a Video Electronics Standards Association (VESA) local bus and a Peripheral Unit Interconnection (PCI) bus.

The computing device 1000 may also include a working memory 1014, which may be a working memory of any type that is capable of storing instructions and/or data usable for work of the processor 1004, and may include but be not limited to an RAM and/or an ROM.

Software elements may be located in the working memory 1014, including, but being not limited to an operating system 1016, one or more applications 1018, a driver program and/or other data and codes. Instructions for performing said method and steps may be included in the one or more applications 1018, and units in each of said apparatuses 100 and 300 may be implemented by reading and executing of instructions of the one or more applications 1018 by the processor 1004. More particularly, the tightening curve generation unit 110 may be, for example, implemented by the processor 1004 upon execution of the applications 1018 having instructions for performing step S210. The pattern recognition unit 120 may be, for example, implemented by the processor 1004 upon execution of the applications 1018 having instructions for performing step S220. The classification model establishment unit 310 may be, for example, implemented by the processor 1004 upon execution of the applications 1018 having instructions for performing step S410. Furthermore, similarly, the torque curve generation unit 320, the pattern recognition unit 330, and the notification and display unit 340 may be, for example, implemented by the processor 1004 upon execution of the applications 1018 having instructions for performing steps S420, S430 and S440. Executable codes or source codes of instructions of the software elements may be stored on a non-transitory computer-readable storage medium (such as said (one or more) storage devices 1010), and may be read to the working memory 1014 in a case of possible compiling and/or installation. Executable codes or source codes of instructions of the software elements may also be downloaded from a remote location.

Those skilled in the art may clearly know from the above embodiments that the present disclosure may be implemented by software with necessary hardware, or by hardware, firmware and the like. Based on such understanding, the embodiments of the present disclosure may be embodied in part in a software form. The computer software may be stored in a readable storage medium such as a floppy disk, a hard disk, an optical disk or a flash memory of the computer. The computer software comprises a series of instructions to make the computer (e.g., a personal computer, a service station or a network terminal) execute the method or a part thereof according to respective embodiment of the present disclosure.

The present disclosure being thus described, it will be obvious that the same may be varied in many ways. All such modifications as would be obvious to those skilled in the art are intended to be included within the scope of the following claims.

## Claims

1. A method for detecting tightening quality of a tightening tool, comprising:
obtaining (S210) tightening data generated during a tightening process of the tightening tool, and generating a tightening curve representing change of the tightening data over time, wherein the tightening curve comprises a torque curve representing change of torque data of the tightening tool over time and an angle curve representing change of angle data of the tightening tool over time; and
performing (S220) pattern recognition on the tightening curve to classify the tightening curve, wherein a different category of the tightening curve corresponds to a different category of tightening quality of the tightening tool, wherein the different categories of tightening quality of the tightening tool comprises: a qualified category in which industrial standard thresholds are satisfied, a hidden threat category in which the industrial standard thresholds are satisfied but there is a hidden threat, and an unqualified category in which the industrial standard thresholds are not satisfied,
wherein the industrial standard thresholds being satisfied means that both a maximum magnitude of the torque curve and a maximum magnitude of the angle curve fall within a range of thresholds defined by lower and upper thresholds set according to an industry standard, and the industrial standard thresholds being not satisfied means that the maximum magnitude of the torque curve and/or the maximum magnitude of the angle curve do not fall within said range of thresholds,
the method being **characterized in that**,
the unqualified category includes at least one of the following two sub-categories:
existence of welding slag, wherein in a case where the industrial standard thresholds are not satisfied and the magnitudes of the torque curve randomly oscillate in the front and middle segments of the torque curve and the torque curve has one or more peaks accompanied by the random oscillation, wherein the peaks are greater than amplitudes of the random oscillation and less than said maximum magnitude, the category of the tightening quality of the tightening tool is determined to be existence of welding slag; and
human operation, wherein in a case where the industrial standard thresholds are not satisfied, and the magnitudes of the torque curve oscillate and amplitudes of the oscillation increase or decrease as the time elapses in the middle and rear segments of the torque curve, the category of the tightening quality of the tightening tool is determined to be human operation.

2. The method according to claim 1, wherein performing (S220) pattern recognition on the tightening curve to classify the tightening curve comprises:
dividing (S432) the tightening curve into segments,
performing (S434) feature identification on the segmented curve segments, and
based on the identified features of the curve segments, classifying (S436) the tightening curve using a pre-established classification model.

3. The method according to claim 2, further comprising: pre-establishing (S410) a classification model by performing machine learning on tightening curves of known categories before obtaining the tightening data, pre-establishing (S410) the classification model comprising:
dividing (S412) each of the tightening curves of known categories into segments,
performing (S414) feature identification on the segmented curve segments of each of the tightening curves, and
establishing (S416) the classification model by using the identified features of the curve segments of each of the tightening curves and a corresponding category.

4. The method according to claim 1, wherein the hidden thread category includes at least one of the following three sub-categories:
angle rollback caused by human operation, wherein in a case where the industrial standard thresholds are satisfied, and there is an abnormal small peak in the front and/or middle segments of the torque curve, the category of the tightening quality of the tightening tool is determined to be angle rollback caused by human operation;
existence of welding slag or screw thread damage, wherein in a case where the industrial standard thresholds are satisfied, and there are random oscillations in the front and middle segments of the torque curve and an abnormal peak exists accompanied by the random oscillations, the category of the tightening quality of the tightening tool is determined to be existence of welding slag or screw thread damage; and
human operation, wherein in a case where the industrial standard thresholds are satisfied, and there are periodic oscillations with incremental amplitudes in the front and/or middle segments of the torque curve, the category of the tightening quality of the tightening tool is determined to be human operation.

5. The method according to claim 1, further comprising: notifying (S440) in real time a result of classification of the tightening quality by an e-mail or short message.

6. The method according to claim 1, further comprising: graphically displaying (S440) on a display the results of classification of the tightening qualities of a plurality of tightening tools.

7. The method according to claim 1, further comprising: displaying (S440) the tightening curves of one or more tightening tools on a display.

8. A method for detecting tightening quality of a tightening tool, comprising:
obtaining (S210) tightening data generated during a tightening process of the tightening tool, and generating a tightening curve representing change of the tightening data over time, wherein the tightening curve comprises a torque curve representing change of torque data of the tightening tool over time and an angle curve representing change of angle data of the tightening tool over time; and
performing (S220) pattern recognition on the tightening curve to classify the tightening curve, wherein a different category of the tightening curve corresponds to a different category of tightening quality of the tightening tool, wherein the different categories of tightening quality of the tightening tool comprises: a qualified category in which industrial standard thresholds are satisfied, a hidden threat category in which the industrial standard thresholds are satisfied but there is a hidden threat, and an unqualified category in which the industrial standard thresholds are not satisfied,
wherein the industrial standard thresholds being satisfied means that both a maximum magnitude of the torque curve and a maximum magnitude of the angle curve fall within a range of thresholds defined by lower and upper thresholds set according to an industry standard, and the industrial standard thresholds being not satisfied means that the maximum magnitude of the torque curve and/or the maximum magnitude of the angle curve do not fall within said range of thresholds,
the method being **characterized in that**,
the hidden thread category includes at least one of the following three sub-categories:
angle rollback caused by human operation, wherein in a case where the industrial standard thresholds are satisfied, and the torque curve has a small peak in the front and/or middle segments of the torque curve, wherein the small peak is smaller than a half of said maximum magnitude, the category of the tightening quality of the tightening tool is determined to be angle rollback caused by human operation;
existence of welding slag or screw thread damage, wherein in a case where the industrial standard thresholds are satisfied, and the magnitudes of the torque curve randomly oscillate in the front and middle segments of the torque curve and the torque curve has a peak accompanied by the random oscillation, wherein the peak is greater than amplitudes of the random oscillation and less than said maximum magnitude, the category of the tightening quality of the tightening tool is determined to be existence of welding slag or screw thread damage; and
human operation, wherein in a case where the industrial standard thresholds are satisfied, and the magnitudes of the torque curve periodically oscillate and the amplitudes of the periodic oscillation increase as the time elapses in the front and/or middle segments of the torque curve, the category of the tightening quality of the tightening tool is determined to be human operation.

9. An apparatus for detecting tightening quality of a tightening tool, **characterized by**, comprising:
at least one processor (1004); and
at least one storage device (1010) storing instructions that when executed by the at least one processor cause the at least one processor to perform the method according to any one of claims 1 to 8.

## Patentansprüche

1. Verfahren zur Detektion der Festziehqualität eines Festziehwerkzeugs, umfassend:
Erhalten (S210) von Anzugsdaten, die während eines Anziehvorgangs des Festziehwerkzeugs erzeugt werden, und Erzeugen einer Anzugskurve, die eine Änderung der Anzugsdaten über die Zeit repräsentiert, wobei die Anzugskurve eine Drehmomentkurve, die eine Änderung von Drehmomentdaten des Festziehwerkzeugs über die Zeit repräsentiert, und eine Winkelkurve, die eine Änderung von Winkeldaten des Festziehwerkzeugs über die Zeit repräsentiert, umfasst; und
Ausführen (S220) einer Mustererkennung an der Anzugskurve zur Klassifizierung der Anzugskurve, wobei eine unterschiedliche Kategorie der Anzugskurve einer unterschiedlichen Kategorie von Festziehqualität des Festziehwerkzeugs entspricht, wobei die unterschiedlichen Kategorien von Festziehqualität des Festziehwerkzeugs Folgendes umfassen: eine Kategorie Geeignet, in der Industriestandard-Schwellenwerte erfüllt werden, eine Kategorie Versteckte Gefahr, in der die Industriestandard-Schwellenwerte erfüllt werden, aber eine versteckte Gefahr gegeben ist, und eine Kategorie Ungeeignet, in der die Industriestandard-Schwellenwerte nicht erfüllt werden,
wobei ein Erfüllen von Industriestandard-Schwellenwerten bedeutet, dass sowohl ein Maximalbetrag der Drehmomentkurve als auch ein Maximalbetrag der Winkelkurve innerhalb eines Schwellenwertbereichs liegen, der durch untere und obere Schwellenwerte definiert ist, die gemäß einem Industriestandard festgelegt sind, und wobei ein Nichterfüllen der Industriestandard-Schwellenwerte bedeutet, dass der Maximalbetrag der Drehmomentkurve und/oder der Maximalbetrag der Winkelkurve nicht innerhalb des Schwellenwertbereichs liegen,
wobei das Verfahren **dadurch gekennzeichnet ist, dass**
die Kategorie Ungeeignet mindestens eine der folgenden zwei Unterkategorien umfasst:
Vorhandensein von Schweißschlacke, wobei die Kategorie der Festziehqualität des Festziehwerkzeugs in einem Fall als Vorhandensein von Schweißschlacke bestimmt wird, in dem die Industriestandard-Schwellenwerte nicht erfüllt werden und die Beträge der Drehmomentkurve in den vorderen und mittleren Segmenten der Drehmomentkurve zufällig schwanken und die Drehmomentkurve eine oder mehrere Spitzen einhergehend mit der zufälligen Schwankung aufweist, wobei die Spitzen größer als Amplituden der zufälligen Schwankung und kleiner als der Maximalbetrag sind; und
Menschliche Bedienung, wobei die Kategorie der Festziehqualität des Festziehwerkzeugs in einem Fall als Menschliche Bedienung bestimmt wird, in dem die Industriestandard-Schwellenwerte nicht erfüllt werden und die Beträge der Drehmomentkurve schwanken und Amplituden der Schwankung mit fortschreitender Zeit in den mittleren und hinteren Segmenten der Drehmomentkurve zunehmen oder abnehmen.

2. Verfahren nach Anspruch 1, wobei das Ausführen (S220) einer Mustererkennung an der Anzugskurve zur Klassifizierung der Anzugskurve Folgendes umfasst:
Unterteilen (S432) der Anzugskurve in Segmente,
Ausführen (S434) einer Merkmalsidentifizierung an den segmentierten Kurvensegmenten, und
Klassifizieren (S436), basierend auf den identifizierten Merkmalen der Kurvensegmente, der Anzugskurve unter Verwendung eines vorab erstellten Klassifizierungsmodells.

3. Verfahren nach Anspruch 2, ferner umfassend: Voraberstellen (S410) eines Klassifizierungsmodells durch Ausführen von maschinellem Lernen an Anzugskurven bekannter Kategorien, bevor die Anzugsdaten erhalten werden, wobei das Voraberstellen (S410) des Klassifizierungsmodells Folgendes umfasst:
Unterteilen (S412) jeder der Anzugskurven bekannter Kategorien in Segmente,
Ausführen (S414) einer Merkmalsidentifizierung an den segmentierten Kurvensegmenten von jeder der Anzugskurven, und
Erstellen (S416) des Klassifizierungsmodells unter Verwendung der identifizierten Merkmale der Kurvensegmente von jeder der Anzugskurven und einer entsprechenden Kategorie.

4. Verfahren nach Anspruch 1, wobei die Kategorie Versteckte Gefahr mindestens eine der folgenden drei Unterkategorien umfasst:
Durch menschliche Bedienung verursachte Winkelrückstellung, wobei die Kategorie der Festziehqualität des Festziehwerkzeugs in einem Fall als Durch menschliche Bedienung verursachte Winkelrückstellung bestimmt wird, in dem die Industriestandard-Schwellenwerte erfüllt werden und eine anormale kleine Spitze in den vorderen und/oder mittleren Segmenten der Drehmomentkurve vorliegt;
Vorhandensein von Schweißschlacke oder Schraubengewindeschäden, wobei die Kategorie der Festziehqualität des Festziehwerkzeugs in einem Fall als Vorhandensein von Schweißschlacke oder Schraubengewindeschäden bestimmt wird, in dem die Industriestandard-Schwellenwerte erfüllt werden und zufällige Schwankungen in den vorderen und mittleren Segmenten der Drehmomentkurve auftreten und eine anormale Spitze einhergehend mit den zufälligen Schwankungen vorliegt; und
Menschliche Bedienung, wobei die Kategorie der Festziehqualität des Festziehwerkzeugs in einem Fall als Menschliche Bedienung bestimmt wird, in dem die Industriestandard-Schwellenwerte erfüllt werden und periodische Schwankungen mit inkrementellen Amplituden in den vorderen und/oder mittleren Segmenten der Drehmomentkurve auftreten.

5. Verfahren nach Anspruch 1, ferner umfassend: Melden (S440) eines Ergebnisses der Klassifizierung der Festziehqualität in Echtzeit mittels einer E-Mail oder Kurznachricht.

6. Verfahren nach Anspruch 1, ferner umfassend: grafisches Anzeigen (S440) der Ergebnisse der Klassifizierung der Festziehqualität einer Vielzahl von Festziehwerkzeugen auf einer Anzeige.

7. Verfahren nach Anspruch 1, ferner umfassend: Anzeigen (S440) der Anzugskurven eines oder mehrerer Festziehwerkzeuge auf einer Anzeige.

8. Verfahren zur Detektion der Festziehqualität eines Festziehwerkzeugs, umfassend:
Erhalten (S210) von Anzugsdaten, die während eines Anziehvorgangs des Festziehwerkzeugs erzeugt werden, und Erzeugen einer Anzugskurve, die eine Änderung der Anzugsdaten über die Zeit repräsentiert, wobei die Anzugskurve eine Drehmomentkurve, die eine Änderung von Drehmomentdaten des Festziehwerkzeugs über die Zeit repräsentiert, und eine Winkelkurve, die eine Änderung von Winkeldaten des Festziehwerkzeugs über die Zeit repräsentiert, umfasst; und
Ausführen (S220) einer Mustererkennung an der Anzugskurve zur Klassifizierung der Anzugskurve, wobei eine unterschiedliche Kategorie der Anzugskurve einer unterschiedlichen Kategorie von Festziehqualität des Festziehwerkzeugs entspricht, wobei die unterschiedlichen Kategorien von Festziehqualität des Festziehwerkzeugs Folgendes umfassen: eine Kategorie Geeignet, in der Industriestandard-Schwellenwerte erfüllt werden, eine Kategorie Versteckte Gefahr, in der die Industriestandard-Schwellenwerte erfüllt werden, aber eine versteckte Gefahr gegeben ist, und eine Kategorie Ungeeignet, in der die Industriestandard-Schwellenwerte nicht erfüllt werden,
wobei ein Erfüllen von Industriestandard-Schwellenwerten bedeutet, dass sowohl ein Maximalbetrag der Drehmomentkurve als auch ein Maximalbetrag der Winkelkurve innerhalb eines Schwellenwertbereichs liegen, der durch untere und obere Schwellenwerte definiert ist, die gemäß einem Industriestandard festgelegt sind, und wobei ein Nichterfüllen der Industriestandard-Schwellenwerte bedeutet, dass der Maximalbetrag der Drehmomentkurve und/oder der Maximalbetrag der Winkelkurve nicht innerhalb des Schwellenwertbereichs liegen,
wobei das Verfahren **dadurch gekennzeichnet ist, dass**
die Kategorie Versteckte Gefahr mindestens eine der folgenden drei Unterkategorien umfasst:
Durch menschliche Bedienung verursachte Winkelrückstellung, wobei die Kategorie der Festziehqualität des Festziehwerkzeugs in einem Fall als Durch menschliche Bedienung verursachte Winkelrückstellung bestimmt wird, in dem die Industriestandard-Schwellenwerte erfüllt werden und die Drehmomentkurve eine kleine Spitze in den vorderen und/oder mittleren Segmenten der Drehmomentkurve aufweist, wobei die kleine Spitze kleiner als eine Hälfte des Maximalbetrags ist;
Vorhandensein von Schweißschlacke oder Schraubengewindeschäden, wobei die Kategorie der Festziehqualität des Festziehwerkzeugs in einem Fall als Vorhandensein von Schweißschlacke oder Schraubengewindeschäden bestimmt wird, in dem die Industriestandard-Schwellenwerte erfüllt werden und die Beträge der Drehmomentkurve in den vorderen und mittleren Segmenten der Drehmomentkurve zufällig schwanken und die Drehmomentkurve eine Spitze einhergehend mit der zufälligen Schwankung aufweist, wobei die Spitze größer als Amplituden der zufälligen Schwankung und kleiner als der Maximalbetrag ist; und
Menschliche Bedienung, wobei die Kategorie der Festziehqualität des Festziehwerkzeugs in einem Fall als Menschliche Bedienung bestimmt wird, in dem die Industriestandard-Schwellenwerte erfüllt werden und die Beträge der Drehmomentkurve periodisch schwanken und die Amplituden der periodischen Schwankung mit fortschreitender Zeit in den vorderen und/oder mittleren Segmenten der Drehmomentkurve zunehmen.

9. Einrichtung zur Detektion der Festziehqualität eines Festziehwerkzeugs, **dadurch gekennzeichnet, dass** sie Folgendes umfasst:
mindestens einen Prozessor (1004); und
mindestens eine Speichervorrichtung (1010), die Anweisungen speichert, die, wenn sie von dem mindestens einen Prozessor ausgeführt werden, den mindestens einen Prozessor veranlassen, das Verfahren nach einem beliebigen der Ansprüche 1 bis 8 auszuführen.

## Revendications

1. Procédé de détection de la qualité de serrage d'un outil de serrage, comprenant :
l'obtention (S210) de données de serrage générées pendant une opération de serrage de l'outil de serrage, et la génération d'une courbe de serrage représentant un changement des données de serrage dans le temps, dans lequel la courbe de serrage comprend une courbe de couple représentant un changement de données de couple de l'outil de serrage dans le temps et une courbe d'angle représentant un changement de données d'angle de l'outil de serrage dans le temps ; et
l'exécution (S220) d'une reconnaissance de forme sur la courbe de serrage pour classer la courbe de serrage, dans lequel une catégorie différente de la courbe de serrage correspond à une catégorie différente de qualité de serrage de l'outil de serrage, dans lequel les différentes catégories de qualité de serrage de l'outil de serrage comprennent : une catégorie qualifiée dans laquelle des seuils de norme industrielle sont atteints, une catégorie de menace cachée dans laquelle les seuils de norme industrielle sont atteints mais une menace cachée se présente, et une catégorie non qualifiée dans laquelle les seuils de norme industrielle ne sont pas atteints,
dans lequel les seuils de norme industrielle sont atteints lorsqu'une amplitude maximale de la courbe de couple et une amplitude maximale de la courbe d'angle tombent toutes deux dans une plage de seuils définis par des seuils inférieurs et supérieurs déterminés conformément à une norme industrielle, et les seuils de norme industrielle ne sont pas atteints lorsque l'amplitude maximale de la courbe de couple et/ou l'amplitude maximale de la courbe d'angle ne tombent pas dans ladite plage de seuils,
le procédé étant **caractérisé en ce que**
la catégorie non qualifiée inclut l'une au moins parmi les deux sous-catégories suivantes :
présence de scories de soudure, sachant que dans un cas où les seuils de norme industrielle ne sont pas atteints et où les amplitudes de la courbe de couple oscillent de façon aléatoire dans les segments antérieur et central de la courbe de couple et où la courbe de couple présente un ou plusieurs pics associés à l'oscillation aléatoire, les pics étant plus grands que des amplitudes de l'oscillation aléatoire et plus petits que ladite amplitude maximale, la catégorie de la qualité de serrage de l'outil de serrage est déterminée comme étant des scories de soudure ; et
intervention humaine, sachant que dans un cas où les seuils de norme industrielle ne sont pas atteints et où les amplitudes de la courbe de couple oscillent et où des amplitudes de l'oscillation augmentent ou diminuent avec le temps dans les segments central et postérieur de la courbe de couple, la catégorie de la qualité de serrage de l'outil de serrage est déterminée comme étant une intervention humaine.

2. Procédé selon la revendication 1, dans lequel l'exécution (S220) d'une reconnaissance de forme sur la courbe de serrage pour la classification de la courbe de serrage comprend :
la division (S432) de la courbe de serrage en segments,
l'exécution (S434) d'une identification de caractéristiques sur les segments de courbe segmentée, et
sur la base des caractéristiques identifiées des segments de courbe, la classification (S436) de la courbe de serrage à l'aide d'un modèle de classification préétabli.

3. Procédé selon la revendication 2, comprenant en outre : le préétablissement (S410) d'un modèle de classification par exécution d'un apprentissage par machine sur des courbes de serrage de catégories connues avant l'obtention des données de serrage, le préétablissement (S410) du modèle de classification comprenant :
la division (S412) de chacune des courbes de serrage de catégories connues en segments,
l'exécution (S414) d'une identification de caractéristiques sur les segments de courbe segmentée de chacune des courbes de serrage, et
l'établissement (S416) du modèle de classification à l'aide des caractéristiques identifiées des segments de courbe de chacune des courbes de serrage et d'une catégorie correspondante.

4. Procédé selon la revendication 1, dans lequel la catégorie de menace cachée inclut l'une au moins des trois sous-catégories suivantes :
retour d'angle causé par une intervention humaine, sachant que dans un cas où les seuils de norme industrielle sont atteints, et où se présente un pic anormalement petit dans les segments antérieur et/ou central de la courbe de couple, la catégorie de la qualité de serrage de l'outil de serrage est déterminée comme étant un retour d'angle causé par une intervention humaine ;
existence de scories de soudure ou d'un filetage endommagé, sachant que dans un cas où les seuils de norme industrielle sont atteints, et où des oscillations aléatoires se présentent dans les segments antérieur et central de la courbe de couple et où un pic anormal se présente en association avec les oscillations aléatoires, la catégorie de la qualité de serrage de l'outil de serrage est déterminée comme étant des scories de soudure ou un filetage endommagé ; et
intervention humaine, sachant que dans le cas où les seuils de norme industrielle sont atteints, et où se présentent des oscillations périodiques avec des amplitudes incrémentales dans les segments antérieur et/ou central de la courbe de couple, la catégorie de la qualité de serrage de l'outil de serrage est déterminée comme étant une intervention humaine.

5. Procédé selon la revendication 1, comprenant en outre : la notification (S440) en temps réel d'un résultat de classification de la qualité de serrage par un email ou un court message.

6. Procédé selon la revendication 1, comprenant en outre : l'affichage graphique (S440) sur un écran des résultats de classification des qualités de serrage d'une pluralité d'outils de serrage.

7. Procédé selon la revendication 1, comprenant en outre : l'affichage (S440) des courbes de serrage d'un ou de plusieurs outils de serrage sur un écran.

8. Procédé de détection de la qualité de serrage d'un outil de serrage, comprenant :
l'obtention (S210) de données de serrage générées pendant une opération de serrage de l'outil de serrage, et la génération d'une courbe de serrage représentant un changement des données de serrage dans le temps, dans lequel la courbe de serrage comprend une courbe de couple représentant un changement de données de couple de l'outil de serrage dans le temps et une courbe d'angle représentant un changement de données d'angle de l'outil de serrage dans le temps ; et
l'exécution (S220) d'une reconnaissance de forme sur la courbe de serrage pour classer la courbe de serrage, dans lequel une catégorie différente de la courbe de serrage correspond à une catégorie différente de qualité de serrage de l'outil de serrage, dans lequel les différentes catégories de qualité de serrage de l'outil de serrage comprennent : une catégorie qualifiée dans laquelle des seuils de norme industrielle sont atteints, une catégorie de menace cachée dans laquelle les seuils de norme industrielle sont atteints mais une menace cachée se présente, et une catégorie non qualifiée dans laquelle les seuils de norme industrielle ne sont pas atteints,
dans lequel les seuils de norme industrielle sont atteints lorsqu'une amplitude maximale de la courbe de couple et une amplitude maximale de la courbe d'angle tombent toutes deux dans une plage de seuils définis par des seuils inférieurs et supérieurs déterminés conformément à une norme industrielle, et les seuils de norme industrielle ne sont pas atteints lorsque l'amplitude maximale de la courbe de couple et/ou l'amplitude maximale de la courbe d'angle ne tombent pas dans ladite plage de seuils,
le procédé étant **caractérisé en ce que**
la catégorie de menace cachée inclut l'une au moins parmi les trois sous-catégories suivantes :
retour d'angle causé par une intervention humaine, sachant que dans un cas où les seuils de norme industrielle sont atteints, et où la courbe de couple présente un petit pic dans les segments antérieur et/ou central de la courbe de couple, le petit pic étant inférieur à une moitié de ladite amplitude maximale, la catégorie de la qualité de serrage de l'outil de serrage est déterminée comme étant un retour d'angle causé par une intervention humaine ;
existence de scories de soudure ou d'un filetage endommagé, sachant que dans un cas où les seuils de norme industrielle sont atteints, et où les amplitudes de la courbe de couple oscillent de façon aléatoire dans les segments antérieur et central de la courbe de couple et où la courbe de couple présente un pic associé à l'oscillations aléatoires, le pic étant supérieur à des amplitudes de l'oscillations aléatoires et inférieur à ladite amplitude maximale, la catégorie de la qualité de serrage de l'outil de serrage est déterminée comme étant des scories de soudure ou un filetage endommagé ; et
intervention humaine, sachant que dans le cas où les seuils de norme industrielle sont atteints, et où les amplitudes de la courbe de couple oscillent périodiquement et les amplitudes de l'oscillation périodique augmentent avec le temps dans les segments antérieur et/ou central de la courbe de couple, la catégorie de la qualité de serrage de l'outil de serrage est déterminée comme étant une intervention humaine.

9. Appareil de détection de la qualité de serrage d'un outil de serrage, **caractérisé en ce qu'**il comprend :
au moins un processeur (1004) ; et
au moins un dispositif de stockage (1010) stockant des instructions amenant l'au moins un processeur à mettre en oeuvre le procédé selon l'une quelconque des revendications 1 à 8 lorsqu'elles sont exécutées par l'au moins un processeur.
